# EUROPÄISCHE PATENTSCHRIFT

(11) **EP 3 918 895 B1**
(45) Veröffentlichungstag und Bekanntmachung des Hinweises auf die Patenterteilung: **13.08.2025**
(21) Anmeldenummer: 21401026.6
(22) Anmeldetag: 18.05.2021
(51) Int. Cl.: A01B 69/00, A01C 21/00, A01B 39/18, A01M 7/00

(54) **LANDWIRTSCHAFTLICHES PFLANZENPFLEGEGERÄT FÜR REIHENKULTUREN**
AGRICULTURAL PLANT TREATMENT APPARATUS FOR ROW CROPS
APPAREIL AGRICOLE DE SOINS POUR PLANTES À CULTIVER EN LIGNES

(30) Priorität: 05.06.2020 DE 102020114981
(43) Veröffentlichungstag der Anmeldung: 08.12.2021
(60) Teilanmeldung: 25188368.2
(73) Patentinhaber: Amazonen-Werke H. Dreyer SE & Co. KG, 49205 Hasbergen (DE)
(72) Erfinder: Resch, Rainer, 49170 Hagen a TW (DE); Wessels, Thomas, 49080 Osnabrück (DE); Rahe, Florian, 49504 Lotte (DE)

(56) Entgegenhaltungen:
- EP-B1- 3 298 877
- DE-A1- 4 220 913
- US-A1- 2009 204 281
- US-A1- 2018 376 128
- US-A1- 2020 100 422

## Beschreibung

Die Erfindung betrifft ein landwirtschaftliches Pflanzenpflegegerät für Reihenkulturen nach dem Oberbegriff des Patentanspruchs 1 und ein Verfahren zum Durchführen einer Pflegemaßnahme an einer Reihenkultur nach dem Oberbegriff des Patentanspruchs 10.

Bei der Pflege von Reihenkulturen ist das Ergebnis der durchgeführten Pflegemaßnahme in einem erheblichen Maße von einer präzisen Reihenerfassung abhängig. Moderne Pflanzenpflegegeräte, wie beispielsweise Hackgeräte, verfügen aus diesem Grund regelmäßig über eine Reihenerfassungseinrichtung, mittels welcher Positionen und Verläufe von Pflanzenreihen während des Durchführens von Pflegemaßnahmen an Reihenkulturen ermittelt werden können.

Das Aufzeichnen der Positionen und Verläufe von Pflanzenreihen während der Durchführung von Pflegemaßnahmen an einer Reihenkultur kann dabei sensorgestützt erfolgen, wie es beispielsweise die US 2009 0 204 281 A1, die US 2018 0 376 128 A1, die US 2020 0 100 422 A1, die DE 42 20 913 A1 oder die EP 3 298 877 B1 zeigen. Neben der sensorgestützten Erfassung von Pflanzenreihen ist beispielsweise aus der Druckschrift DE 10 2005 010 686 A1 eine satellitengestützte Ausbringung von Saatgut bekannt, sodass Positions- und Verlaufsinformationen zu den Pflanzenreihen bereits vor dem Auflaufen der Pflanzen auf der landwirtschaftlichen Nutzfläche vorliegen. Auf diese Weise kann der Reihenverlauf ermittelt werden, ohne dass die Pflanzen an der Bodenoberfläche sichtbar sein müssen.

Die während des Sävorgangs aufgezeichneten Saatgut-Positionsinformationen können dann bei der nachträglichen Durchführung von Pflegemaßnahmen an dem Pflanzenbestand verwendet werden. Aus den Druckschriften DE 10 2017 126 222 A1 und US 6,199,000 B1 ist beispielsweise die gezielte lokale Ausbringung von Pflanzenschutzmitteln auf Schadbewuchs bekannt, wobei der Schadbewuchs unter Berücksichtigung von Saatgut-Positionsinformationen und Messdaten von Spektralsensoren bzw. Chlorophyll-Detektoren erfassen wird.

In der Praxis liegen entsprechende Saatgut-Positionsinformationen, welche während der Saatgutausbringung aufgezeichnet wurden, jedoch häufig nicht vor. Aus diesem Grund wird die Bewegung und/oder der Betrieb des landwirtschaftlichen Pflanzenpflegegeräts während des Durchführens einer Pflegemaßnahme häufig in Abhängigkeit von Reiheninformationen gesteuert, welche während des Durchführens der Pflegemaßnahmen durch das Pflanzenpflegegerät selbst ermittelt werden. Hierbei werden die Positionen und/oder Verläufe von Pflanzenreihen beispielsweise kameragestützt durch das Pflanzenpflegegerät ermittelt.

In diesem Zusammenhang besteht jedoch das Problem, dass einige zur Reihenerfassung eingesetzte Sensorsysteme lediglich die präzise Reihenerkennung bei vergleichsweise jungen Pflanzen und andere zur Reihenerfassung eingesetzte Sensorsysteme lediglich die präzise Reihenerkennung bei Pflanzen erlauben, die sich bereits in einem fortgeschrittenen Wachstumsstadium befinden. Insofern sind die bekannten landwirtschaftlichen Pflanzenpflegegeräte entweder mit einem Sensorsystem ausgestattet, welches eine präzise Reihenerkennung nur in einer spezifischen Wachstumsperiode der Pflanzen erlaubt oder wobei das Sensorsystem ein Kompromiss darstellt, sodass eine Reihenerfassung in allen Wachstumsphasen der Pflanzen möglich ist, dies jedoch mit einer verringerten Erfassungspräzision einhergeht.

Fehlerhaft detektierte oder unpräzise erfasste Reihenverläufe führen zu mangelhaften Bearbeitungsergebnissen. Bei reihengeführt gesteuerten Pflegemaßnahmen kann dies einen erheblichen Ertragsverlust mit sich bringen.

Die der Erfindung zugrundeliegende Aufgabe besteht somit darin, eine präzise Reihenerfassung unabhängig vom Wachstumszustand der Pflanzen zu ermöglichen.

Die Aufgabe wird gelöst durch ein landwirtschaftliches Pflanzenpflegegerät der eingangs genannten Art, wobei die Reihenerfassungseinrichtung
nach dem kennzeichnenden Teil des Patentanspruchs 1 eingerichtet ist.

Dadurch, dass die zumindest eine Sensoreinheit des ersten Sensorsystems und die zumindest eine Sensoreinheit des zweiten Sensorsystems in unterschiedlichen Höhen angeordnet sind und/oder unterschiedliche Ausrichtungen aufweisen, kann eine zuverlässige und präzise Reihendetektion sowohl bei vergleichsweise jungen Pflanzen als auch bei Pflanzen, welche sich bereits in einem fortgeschrittenen Wachstumsstadium befinden, erfolgen. Eines der Sensorsysteme kann dabei beispielsweise eine präzise Reihenerkennung bei vergleichsweise jungen Pflanzen ermöglichen, wobei das andere Sensorsystem eine präzise Reihenerkennung bei Pflanzen ermöglicht, welche sich in einem fortgeschrittenen Wachstumsstadium befinden. Das erste und das zweite Sensorsystem werden beim Durchführen einer Pflegemaßnahme an einer Reihenkultur vorzugsweise gleichzeitig eingesetzt. In diesem Fall kann eine Datenfusion der von den Sensorsystemen aufgezeichneten Sensordaten erfolgen, sodass eine besonders präzise Reihenerkennung umgesetzt wird. Alternativ kann während des Durchführens einer Pflegemaßnahme an einer Reihenkultur auch nur eines der Sensorsysteme eingesetzt werden.

Vorzugsweise ist zumindest eine Sensoreinheit des ersten Sensorsystems in einem ersten Höhenbereich oder auf einer ersten Höhe angeordnet und die zumindest eine Sensoreinheit des zweiten Sensorsystems ist in einem zweiten Höhenbereich oder auf einer zweiten Höhe angeordnet. Der erste Höhenbereich und der zweite Höhenbereich bzw. die erste Höhe und die zweite Höhe sind vertikal beabstandet voneinander. Die zumindest eine Sensoreinheit des ersten Sensorsystems ist also oberhalb oder unterhalb der zumindest einen Sensoreinheit des zweiten Sensorsystems angeordnet.

Die zumindest eine Sensoreinheit des ersten Sensorsystems und die zumindest eine Sensoreinheit des zweiten Sensorsystems sind vorzugsweise dazu eingerichtet, den Verlauf und/oder die Position zumindest einer Pflanzenreihe aus unterschiedlichen Perspektiven zu erfassen. Vorzugsweise ist die zumindest eine Sensoreinheit des ersten Sensorsystems dazu eingerichtet, den Verlauf und/oder die Position zumindest einer Pflanzenreihe aus einer ersten Perspektive zu erfassen, und die zumindest eine Sensoreinheit des zweiten Sensorsystems ist dazu eingerichtet, den Verlauf und/oder die Position zumindest einer Pflanzenreihe aus einer zweiten Perspektive zu erfassen. Die erste und die zweite Perspektive unterscheiden sich dabei voneinander.

Wenn das erste Sensorsystem und das zweite Sensorsystem jeweils mehrere Sensoreinheiten umfassen, sind die Sensoreinheiten des ersten Sensorsystems in einem ersten Höhenbereich oder auf einer ersten Höhe angeordnet und die Sensoreinheiten des zweiten Sensorsystems sind in einem zweiten Höhenbereich oder auf einer zweiten Höhe angeordnet. Alternativ oder zusätzlich weisen die Sensoreinheiten des ersten Sensorsystems eine identische Ausrichtung in Bezug auf zumindest eine Raumrichtung auf und die Sensoreinheiten des zweiten Sensorsystems weisen ebenfalls eine identische Ausrichtung in Bezug auf zumindest eine Raumrichtung auf. Die Sensoreinheiten des ersten Sensorsystems und die Sensoreinheiten des zweiten Sensorsystems weisen vorzugsweise voneinander abweichende Ausrichtungen in Bezug auf zumindest eine Raumrichtung auf.

Das erfindungsgemäße landwirtschaftliche Pflanzenpflegegerät weist eine Steuerungseinrichtung auf, welche dazu eingerichtet ist, eine Steuerung der Bewegung und/oder des Betriebs des landwirtschaftlichen Pflanzenpflegegeräts in Abhängigkeit der durch die Reihenerfassungseinrichtung ermittelten Verläufe und/oder Positionen der Pflanzenreihen zu veranlassen. Wenn das landwirtschaftliche Pflanzenpflegegerät ein Anbaugerät ist, welches von einem Antriebsfahrzeug, wie etwa einem Traktor, getragen, gezogen oder geschoben wird, kann die Steuerungseinrichtung dazu eingerichtet sein, Lenkbefehle für das Antriebsfahrzeug zu erzeugen und die erzeugten Lenkbefehle an das Antriebsfahrzeug zu übermitteln. Eine Lenksteuerung des Antriebsfahrzeugs nimmt dann auf Grundlage der übermittelten Lenkbefehle einen Lenkeingriff vor. Auf diese Weise kann die Bewegung des landwirtschaftlichen Pflanzenpflegegeräts in Abhängigkeit der durch die Reihenerfassungseinrichtung ermittelten Verläufe und/oder Positionen der Pflanzenreihen verändert werden, obwohl das landwirtschaftliche Pflanzenpflegegerät ein Anbaugerät ist. Alternativ oder zusätzlich kann das Pflanzenpflegegerät beispielsweise Pflegewerkzeuge, wie beispielsweise Hackwerkzeuge, in Abhängigkeit der durch die Reihenerfassungseinrichtung ermittelten Verläufe und/oder Positionen der Pflanzenreihen verschieben und/oder ausrichten. Hierzu kann das Pflanzenpflegegerät einen oder mehrere Antriebe aufweisen, über welche die Pflegewerkzeuge verfahren und/oder ausgerichtet werden können. Alternativ kann der Betrieb von Ausbringelementen, wie beispielsweise Spritzdüsen, in Abhängigkeit der durch die Reihenerfassungseinrichtung ermittelten Verläufe und/oder Positionen der Pflanzenreihen gesteuert werden. Dabei kann beispielsweise die Position oder Ausrichtung der Ausbringelemente in Abhängigkeit der ermittelten Verläufe und/oder Positionen der Pflanzenreihen verändert werden. Alternativ oder zusätzlich können einzelne Ausbringelemente in Abhängigkeit der ermittelten Verläufe und/oder Positionen der Pflanzenreihen aktiviert und/oder deaktiviert werden, um so beispielsweise eine Teilbreitenschaltung zu realisieren, bei welcher die Ausbringung von Spritzflüssigkeit segmentweise und/oder düsenweise unterbrochen wird. Alternativ oder zusätzlich können einzelne Ausbringelemente in Abhängigkeit der ermittelten Verläufe und/oder Positionen der Pflanzenreihen ausgerichtet werden. Die Steuerungseinrichtung erlaubt eine präzise Reihenführung des Pflanzenpflegegeräts und dessen Pflegeausstattung in Abhängigkeit der durch die Reihenerfassungseinrichtung ermittelten Verläufe und/oder Positionen der Pflanzenreihen.

In einer anderen bevorzugten Ausführungsform des erfindungsgemäßen landwirtschaftlichen Pflanzenpflegegeräts sind die zumindest eine Sensoreinheit des ersten Sensorsystems und die zumindest eine Sensoreinheit des zweiten Sensorsystems unterschiedliche Sensortypen. Die Sensordatenerfassung der zumindest einen Sensoreinheit des ersten Sensorsystems und die Sensordatenerfassung der zumindest einen Sensoreinheit des zweiten Sensorsystems beruht folglich auf unterschiedlichen Mess- und/oder Aufzeichnungsprinzipien. Beispielsweise ist die zumindest eine Sensoreinheit eines Sensorsystems eine einen Bildsensor aufweisende Kamera und die zumindest eine Sensoreinheit des anderen Sensorsystems ist ein berührungslos arbeitender Abstandssensor, dessen Abstandsmessung beispielsweise auf einer Laufzeitmessung beruht. Alternativ sind die zumindest eine Sensoreinheit des ersten Sensorsystems und die zumindest eine Sensoreinheit des zweiten Sensorsystems vom gleichen Sensortyp. Die Sensordatenaufzeichnung der zumindest einen Sensoreinheit des ersten Sensorsystems und der zumindest einen Sensoreinheit des zweiten Sensorsystems beruht somit auf den gleichen Mess- und/oder Aufzeichnungsprinzipien. Beispielsweise sind die zumindest eine Sensoreinheit des ersten Sensorsystems und die zumindest eine Sensoreinheit des zweiten Sensorsystems jeweils als Kamera ausgebildet. Alternativ können die zumindest eine Sensoreinheit des ersten Sensorsystems und die zumindest eine Sensoreinheit des zweiten Sensorsystems jeweils als berührungsloser Abstandssensor ausgebildet sein, wobei die Abstandsmessung der Abstandssensoren beispielsweise auf einer Laufzeitmessung beruht. Die Sensordatenfusion zur Steigerung der Präzision der Reihenerfassung kann sowohl erfolgen, wenn die zumindest eine Sensoreinheit des ersten Sensorsystems und die zumindest eine Sensoreinheit des zweiten Sensorsystems unterschiedliche Sensortypen sind, als auch wenn die zumindest eine Sensoreinheit des ersten Sensorsystems und die zumindest eine Sensoreinheit des zweiten Sensorsystems vom gleichen Sensortyp sind.

Es ist außerdem ein landwirtschaftliches Pflanzenpflegegerät vorteilhaft, bei welchem das erste Sensorsystem und das zweite Sensorsystem dazu eingerichtet sind, den Verlauf und/oder die Position der gleichen Pflanzenreihe und/oder den Verlauf und/oder die Position von verschiedenen Pflanzenreihen zu ermitteln. Die Sensorsysteme können also zur Reihenerfassung in der gleichen Reihe einsetzbar sein. Alternativ können die Sensorsysteme zur Reihenerfassung in unterschiedlichen Reihen einsetzbar sein. Die zumindest eine Sensoreinheit des ersten Sensorsystems und die zumindest eine Sensoreinheit des zweiten Sensorsystems können in Querrichtung beabstandet voneinander sein und/oder entgegengesetzt ausgerichtet sein. Die Querrichtung erstreckt sich quer zur Fahrtrichtung des landwirtschaftlichen Pflanzenpflegegeräts. Wenn die zumindest eine Sensoreinheit des ersten Sensorsystems und die zumindest eine Sensoreinheit des zweiten Sensorsystems in Querrichtung voneinander beabstandet sind, werden der Abstand zwischen den Sensoreinheiten und/oder die Positionen der Sensoreinheiten, insbesondere relativ zum Pflanzenpflegegerät, vorzugsweise beim Ermitteln der Verläufe und/oder Positionen der Pflanzenreihen berücksichtigt. Vorzugsweise ist die zumindest eine Sensoreinheit des ersten Sensorsystems und/oder die zumindest eine Sensoreinheit des zweiten Sensorsystems starr oder beweglich an einem Querrahmen des landwirtschaftlichen Pflanzenpflegegeräts angeordnet.

In einer Weiterbildung des erfindungsgemäßen landwirtschaftlichen Pflanzenpflegegeräts weist die zumindest eine Sensoreinheit des ersten Sensorsystems einen ersten Neigungswinkel gegenüber einer Horizontalebene auf und die zumindest eine Sensoreinheit des zweiten Sensorsystems weist einen zweiten Neigungswinkel gegenüber einer Horizontalebene auf. Der erste und der zweite Neigungswinkel können sich voneinander unterscheiden. Folglich sind die zumindest eine Sensoreinheit des ersten Sensorsystems und die zumindest eine Sensoreinheit des zweiten Sensorsystems dazu eingerichtet, den Verlauf und/oder die Position zumindest einer Pflanzenreihe aus unterschiedlichen Höhenperspektiven zu erfassen. Die zumindest eine Sensoreinheit eines Sensorsystems kann horizontal oder schräg nach unten ausgerichtet, also schräg von oben blickend, auf die Pflanzen einer Pflanzenreihe schauen. Die zumindest eine Sensoreinheit des anderen Sensorsystems kann horizontal oder schräg nach oben ausgerichtet, also schräg von unten blickend, auf die Pflanzen einer Pflanzenreihe schauen. Die Sensoren sind auf die oberirdischen Abschnitte der Pflanzen ausgerichtet. Alternativ oder zusätzlich weist die zumindest eine Sensoreinheit des ersten Sensorsystems einen ersten Schwenkwinkel gegenüber einer sich in Fahrtrichtung erstreckenden Vertikalebene auf und die zumindest eine Sensoreinheit des zweiten Sensorsystems weist einen zweiten Schwenkwinkel gegenüber einer sich in Fahrtrichtung erstreckenden Vertikalebene auf. Die Sensoreinheiten können also auch schräg zur Fahrtrichtung seitlich auf die Pflanzen schauen. Der erste und der zweite Schwenkwinkel können sich voneinander unterscheiden. Die zumindest eine Sensoreinheit des ersten Sensorsystems und die zumindest eine Sensoreinheit es zweiten Sensorsystems sind vorzugsweise dazu eingerichtet, den Verlauf und/oder die Position zumindest einer Pflanzenreihe aus unterschiedlichen seitlichen Perspektiven zu erfassen.

In einer weiteren bevorzugten Ausführungsform des erfindungsgemäßen landwirtschaftlichen Pflanzenpflegegeräts ist die zumindest eine Sensoreinheit des ersten Sensorsystems und/oder die zumindest eine Sensoreinheit des zweiten Sensorsystems dazu eingerichtet, berührungslos zu arbeiten. Vorzugsweise ist die zumindest eine Sensoreinheit des ersten Sensorsystems und/oder die zumindest eine Sensoreinheit des zweiten Sensorsystems ein berührungslos arbeitender Abstandssensor oder eine einen Bildsensor aufweisende Kamera. Bei fehlenden Pflanzen in der Pflanzenreihe ist eine ausschließlich auf Abtastung basierende Reihenerfassung unpräzise und kann durch eine berührungslose Reihenerfassung unterstützt oder ersetzt werden. Insbesondere in der Auflaufphase der Pflanzen, in welcher die Wuchshöhe häufig zwei Zentimeter nicht überschreitet, kann eine berührungslose Reihenerfassung ohne Beschädigung der Pflanzen erfolgen.

Das erfindungsgemäße landwirtschaftliche Pflanzenpflegegerät wird ferner dadurch vorteilhaft weitergebildet, dass die zumindest eine Sensoreinheit des ersten Sensorsystems und/oder die zumindest eine Sensoreinheit des zweiten Sensorsystems als Abstandssensor ausgebildet ist. Vorzugsweise ist die zumindest eine Sensoreinheit des ersten Sensorsystems und/oder die zumindest eine Sensoreinheit des zweiten Sensorsystems dazu eingerichtet, den Abstand zu Pflanzen einer oder mehrerer Pflanzenreihen zu messen. Bei hochgewachsenen und/oder blattreichen Pflanzen ist eine ausschließlich kamerabasierte Reihenerfassung unpräzise, da die Pflanzenreihen nicht mehr aufgelöst werden können und die Ermittlung der tatsächlichen Stängelposition nicht möglich ist. In diesem Fall kann die kamerabasierte Reihenerfassung durch eine auf Messwerten eines Abstandssensors basierende Reihenerfassung unterstützt oder ersetzt werden. Der Abstandssensor kann dabei beispielsweise ein Ultraschallsensor sein. Alternativ kann der Abstandssensor ein Radarsensor, ein Time-of-Flight (ToF) Sensor, ein Lidarsensor, ein Lasersensor oder ein Laser-Profil-Scanner sein.

In einer weiteren bevorzugten Ausführungsform des erfindungsgemäßen landwirtschaftlichen Pflanzenpflegegeräts umfasst die zumindest eine Sensoreinheit des ersten Sensorsystems und/oder die zumindest eine Sensoreinheit des zweiten Sensorsystems zumindest einen Bildsensor und/oder ist als Kamera ausgebildet. Vorzugsweise weist die Reihenerfassungseinrichtung eine Datenverarbeitungseinrichtung auf, welche dazu eingerichtet ist, die Bildaufnahmen des ersten Sensorsystems und/oder des zweiten Sensorsystems zur Reihenerkennung auszuwerten. Beispielsweise ist die Datenverarbeitungseinrichtung dazu eingerichtet, den Verlauf und/oder die Position zumindest einer Reihe als Strukturinformation aus den Bildaufnahmen des ersten Sensorsystems und/oder des zweiten Sensorsystems abzuleiten. Die Sensoreinheit eines Sensorsystems kann beispielsweise eine obere Kamera sein, wobei die Sensoreinheit des anderen Sensorsystems eine untere Kamera sein kann. Die obere Kamera und die untere Kamera können horizontal, geneigt in Bezug auf eine Horizontalebene und/oder verschwenkt in Bezug auf eine sich in Fahrtrichtung erstreckende Vertikalebene ausgerichtet sein. Dies ermöglicht eine zuverlässige und präzise Reihenerkennung unabhängig vom Wachstumszustand der Pflanzen. Beispielsweise können die Sensoreinheiten beider Sensorsysteme auch jeweils eine Kamera sein, welche oberhalb des Pflanzenbestandes angeordnet ist, wobei die Kameras in diesem Fall vorzugsweise unterschiedliche Ausrichtungen aufweisen. Über eine an die Kameraausrichtung angepasste Bildauswertung kann dann der Reihenverlauf sowohl bei jungen Pflanzen als auch bei Pflanzen, welche sich in einem fortgeschrittenen Wachstumsstadium befinden, zuverlässig ermittelt werden. Bei starker Verunkrautung und/oder fehlenden Pflanzen ist eine berührungslose und auf Messwerten der Abstandssensoren basierende Reihenerfassung vergleichsweise unpräzise und kann durch eine kamerabasierte Reihenerfassung unterstützt und/oder ersetzt werden.

Ferner ist es denkbar, dass die zumindest eine Sensoreinheit des ersten Sensorsystems und/oder die zumindest eine Sensoreinheit des zweiten Sensorsystems als Reihentaster ausgebildet sind und/oder zumindest einen Tastsensor umfassen. In diesem Fall würde die zumindest eine Sensoreinheit des ersten Sensorsystems und/oder die zumindest eine Sensoreinheit des zweiten Sensorsystems nicht-berührungslos arbeiten.

Im Rahmen des erfindungsgemäßen landwirtschaftlichen Pflanzenpflegegeräts weist die Reihenerfassungseinrichtung eine elektronische Datenverarbeitungseinrichtung auf, welche dazu eingerichtet ist, unter Berücksichtigung von Sensordaten des ersten Sensorsystems und Sensordaten des zweiten Sensorsystems Verläufe und/oder Positionen von Pflanzenreihen zu ermitteln. Die Datenverarbeitungseinrichtung berücksichtigt bei der Positions- bzw. Verlaufsermittlung folglich Sensordaten von zwei Sensorsystemen. Auf Grundlage der ermittelten Verläufe und/oder Positionen von Pflanzenreihen kann dann das Pflanzenpflegegerät und/oder ein Antriebsfahrzeug, an welchem das Pflanzenpflegegerät angebaut ist, gesteuert werden. Beispielsweise können auf Grundlage der ermittelten Verläufe und/oder Positionen von Pflanzenreihen Lenkbefehle für das Antriebsfahrzeug erzeugt werden. Die Lenkbefehle können dann an das Antriebsfahrzeug übermittelt werden, sodass ein Lenkeingriff auf Grundlage der Lenkbefehle selbsttätig durch eine Lenksteuerung des Antriebsfahrzeugs umgesetzt werden kann.

Bei der Steuerung des Pflanzenpflegegeräts und/oder des Antriebsfahrzeugs, an dem das Pflanzenpflegegerät angebaut ist, werden die Abmessungen des Pflanzenpflegegeräts und/oder des Antriebsfahrzeugs berücksichtigt.

Das erfindungsgemäße landwirtschaftliche Pflanzenpflegegerät wird ferner dadurch definiert, dass die elektronische Datenverarbeitungseinrichtung dazu eingerichtet ist, im Rahmen einer Sensordatenbewertung die Verwertbarkeit der Sensordaten des ersten Sensorsystems und/oder des zweiten Sensorsystems zum Ermitteln von Verläufen und/oder Positionen von Pflanzenreihen zu bewerten. Wenn das erste Sensorsystem und/oder das zweiten Sensorsystem mehrere Sensoreinheiten umfassen, kann die elektronische Datenverarbeitungseinrichtung dazu eingerichtet sein, im Rahmen einer Sensordatenbewertung die Verwertbarkeit der Sensordaten der jeweiligen Sensoreinheiten zum Ermitteln von Verläufen und/oder Positionen von Pflanzenreihen zu bewerten. Die elektronische Datenverarbeitungseinrichtung kann beispielsweise die Datenplausibilität als Bewertungskriterium für die Verwertbarkeit der Sensordaten berücksichtigen. Auf Grundlage der Sensordatenbewertung kann entschieden werden, ob und/oder in welchem Maße die Sensordaten des jeweiligen Sensorsystems bzw. die Sensordaten der jeweiligen Sensoreinheiten bei der Verlaufs- und/oder Positionsermittlung berücksichtigt werden.

In einer weiteren bevorzugten Ausführungsform des erfindungsgemäßen landwirtschaftlichen Pflanzenpflegegeräts ist die Datenverarbeitungseinrichtung dazu eingerichtet, die Verläufe und/oder Positionen von Pflanzenreihen in Abhängigkeit der Sensordatenbewertung wahlweise über Sensordaten beider Sensorsysteme oder über Sensordaten nur eines der Sensorsysteme zu ermitteln. Die Auswahl erfolgt vorzugsweise auf Grundlage der Sensordaten des ersten Sensorsystems und der Sensordaten des zweiten Sensorsystems. Wenn Sensordaten beider Sensorsysteme in geeignetem Maße verwertbar sind, kann eine Datenfusion zur Reihenerfassung umgesetzt werden. Es kann auch eine Art Genauigkeitsband von der elektronischen Datenverarbeitungseinrichtung berechnet werden. Durch Vergleichen bzw. Übereinanderlegen der Genauigkeitsbänder kann die elektronische Datenverarbeitungseinrichtung dann Bereiche identifizieren, in welchen mit einer äußerst hohen Wahrscheinlichkeit eine Pflanze steht oder eine Pflanzenreihe verläuft.

In einer weiteren bevorzugten Ausführungsform umfassen das erste Sensorsystem und das zweite Sensorsystem jeweils mehrere Sensoreinheiten und die Datenverarbeitungseinrichtung ist dazu eingerichtet, beim Ermitteln von Verläufen und/oder Positionen von Pflanzenreihen in Abhängigkeit der Sensordatenbewertung Sensordaten einzelner Sensoreinheiten des ersten Sensorsystems und/oder Sensordaten einzelner Sensoreinheiten des zweiten Sensorsystems unberücksichtigt zu lassen. Insbesondere, wenn die Sensordaten darauf hinweisen, dass ein Sensorsystem oder eine Sensoreinheit erhebliche Erfassungsschwierigkeiten hat, können diese Sensordaten zur Vermeidung eines negativen Einflusses auf die Reihenerfassung unberücksichtigt bleiben.

Im Rahmen des erfindungsgemäßen landwirtschaftlichen Pflanzenpflegegeräts ist die elektronische Datenverarbeitungseinrichtung dazu eingerichtet, die Sensordaten des ersten Sensorsystems und/oder die Sensordaten des zweiten Sensorsystems in Abhängigkeit der Sensordatenbewertung zu gewichten und Verläufe und/oder Positionen von Pflanzenreihen über die gewichteten Sensordaten zu ermitteln. Wenn das erste Sensordatensystem und/oder das zweite Sensordatensystem mehrere Sensoreinheiten umfasst, kann die elektronische Datenverarbeitungseinrichtung dazu eingerichtet sein, die Sensordaten der jeweiligen Sensoreinheiten in Abhängigkeit der Sensordatenbewertung zu gewichten und Verläufe und/oder Positionen von Pflanzenreihen über die gewichteten Sensordaten zu ermitteln. Wenn die Sensordatenbewertung darauf hinweist, dass die bewerteten Sensordaten Verläufe und/oder Positionen von Pflanzenreihen vergleichsweise präzise wiedergeben, kann diesen Sensordaten beispielsweise ein hoher Gewichtungsfaktor zugeordnet werden. Wenn die Sensordatenbewertung darauf hinweist, dass die bewerteten Sensordaten Verläufe und/oder Positionen von Pflanzenreihen lediglich vergleichsweise unpräzise wiedergeben, kann diesen Sensordaten ein niedriger Gewichtungsfaktor zugewiesen werden. Die Sensordaten können dann unter Berücksichtigung ihrer Gewichtungsfaktoren bei der Verlaufs- und/oder Positionsermittlung berücksichtigt werden.

Es ist außerdem ein landwirtschaftliches Pflanzenpflegegerät bevorzugt, bei welchem die elektronische Datenverarbeitungseinrichtung dazu eingerichtet ist, zur Erhöhung der Verwertbarkeit der Sensordaten des ersten Sensorsystems zum Ermitteln von Verläufen und/oder Positionen von Pflanzenreihen eine Auswertungsroutine für die Sensordaten des ersten Sensorsystems selbsttätig unter Berücksichtigung der Sensordaten des zweiten Sensorsystems zu verändern. Alternativ oder zusätzlich ist die elektronische Datenverarbeitungseinrichtung dazu eingerichtet, zur Erhöhung der Verwertbarkeit der Sensordaten des zweiten Sensorsystems zum Ermitteln von Verläufen und/oder Positionen von Pflanzenreihen eine Auswertungsroutine für die Sensordaten des zweiten Sensorsystems selbsttätig unter Berücksichtigung der Sensordaten des ersten Sensorsystems zu verändern. Es erfolgt also ein gegenseitiges Anlernen der Sensorsysteme mit den Daten des jeweils anderen Sensorsystems. Auf diese Weise können Probleme der jeweiligen Sensorsysteme beim Erfassen von Verläufen und/oder Positionen von Pflanzenreihen mit fortschreitender Verwendung des landwirtschaftlichen Pflanzenpflegegeräts reduziert werden. Wenn sich die Pflanzen bereits in einem fortgeschrittenen Wachstumsstadium befinden, kann ein vorhandenes Blätterdach die kamerabasierte Reihenerkennung beeinträchtigen, da eine kamerabasierte Erfassung der Stängelposition nicht präzise möglich ist. In diesem Fall kann ein Abstandssensor des anderen Sensorsystems, welcher unterhalb der Kamera angeordnet ist, den Stängelabstand vergleichsweise präzise ermitteln. Über die Daten des Abstandssensors kann nun die kameragestützte Reihenerkennung trainiert werden. Beispielsweise kann die Auswerteroutine für die Aufnahmen der Kamera dann selbsttätig derart angepasst werden, dass nicht länger die Stängel, sondern der Mittelpunkt der Blätter als Referenzpunkt für eine Pflanzenposition detektiert wird. Wenn dann der untere Abstandssensor den Reihenabstand nicht mehr präzise messen kann, beispielsweise aufgrund starker Verunkrautung, kann die Reihenerfassung auf Grundlage der Kameraaufnahmen erfolgen, da diese nun auf die neuen Gegebenheiten trainiert worden ist. Durch das gegenseitige Trainieren der Sensorsysteme wird die Erfassungspräzision mit fortschreitender Nutzungsdauer des landwirtschaftlichen Pflanzenpflegegeräts erhöht.

Die der Erfindung zugrundeliegende Aufgabe wird ferner durch ein Verfahren der eingangs genannten Art gelöst, wobei im Rahmen des erfindungsgemäßen Verfahrens das Ermitteln der Verläufe und/oder Positionen der Pflanzenreihen nach dem kennzeichnenden Teil des Patentanspruchs 10 erfolgt. Das erfindungsgemäße Verfahren wird vorzugsweise mittels eines landwirtschaftlichen Pflanzenpflegegeräts nach einer der vorstehend beschriebenen Ausführungsformen ausgeführt. Hinsichtlich der Vorteile und Modifikationen des erfindungsgemäßen Verfahrens wird somit zunächst auf die Vorteile und Modifikationen des erfindungsgemäßen landwirtschaftlichen Pflanzenpflegegeräts verwiesen.

Die zumindest eine Sensoreinheit des ersten Sensorsystems erfasst die Pflanzen der Pflanzenreihen aus einer ersten Perspektive und die zumindest eine Sensoreinheit des zweiten Sensorsystems erfasst die Pflanzen der Pflanzenreihen aus einer zweiten Perspektive. Erfindungsgemäß ermittelt eine elektronische Datenverarbeitungseinrichtung der Reihenerfassungseinrichtung die Verläufe und/der Positionen der Pflanzenreihen unter Berücksichtigung von Sensordaten des ersten Sensorsystems und Sensordaten des zweiten Sensorsystems.

In einer bevorzugten Ausführungsform des erfindungsgemäßen Verfahrens erfolgt das Ermitteln der Verläufe und/oder Positionen der Pflanzenreihen bei einem der Sensorsysteme über eine kamerabasierte Bildaufzeichnung und bei einem der Sensorsysteme über eine berührungslose Abstandsmessung. Die Abstandsmessung kann beispielsweise eine Laufzeitmessung umfassen. Ferner umfasst das Verfahren erfindungsgemäß das Bewerten der Verwertbarkeit der Sensordaten des ersten Sensorsystems zum Ermitteln der Verläufe und/oder Positionen der Pflanzenreihen mittels einer elektronischen Datenverarbeitungseinrichtung im Rahmen einer Sensordatenbewertung. Zusätzlich oder alternativ umfasst das erfindungsgemäße Verfahren das Bewerten der Verwertbarkeit der Sensordaten des zweiten Sensorsystems zum Ermitteln der Verläufe und/oder Positionen der Pflanzenreihen mittels einer elektronischen Datenverarbeitungseinrichtung im Rahmen einer Sensordatenbewertung. Die Verläufe und/oder Positionen der Pflanzenreihen werden vorzugsweise in Abhängigkeit der Sensordatenbewertung wahlweise über Sensordaten beider Sensorsysteme oder über Sensordaten nur eines der Sensorsysteme ermittelt. Beim Ermitteln der Verläufe und/oder Positionen der Pflanzenreihen in Abhängigkeit der Sensordatenbewertung können Sensordaten einzelner Sensoreinheiten des ersten Sensorsystems und/oder Sensordaten einzelner Sensoreinheiten des zweiten Sensorsystems unberücksichtigt bleiben. Erfindungsgemäß werden die Sensordaten des ersten Sensorsystems und/oder die Sensordaten des zweiten Sensorsystems in Abhängigkeit der Sensordatenbewertung von der elektronischen Datenverarbeitungseinrichtung gewichtet und die elektronische Datenverarbeitungseinrichtung ermittelt dann die Verläufe und/oder Positionen der Pflanzenreihen über die gewichteten Sensordaten.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Pflegesystem aus einem Antriebsfahrzeug und einem erfindungsgemäßen landwirtschaftlichen Pflanzenpflegegerät während des Durchführens einer Pflegemaßnahme an einer Reihenkultur mit vergleichsweise jungen Pflanzen in einer Draufsicht;
- Fig. 2: das in der Fig. 1 abgebildete Pflegesystem ebenfalls während des Durchführens der Pflegemaßnahme in einer Seitenansicht;
- Fig. 3: ein Pflegesystem aus einem Antriebsfahrzeug und einem erfindungsgemäßen landwirtschaftlichen Pflanzenpflegegerät während des Durchführens einer Pflegemaßnahme an einer Reihenkultur mit Pflanzen, welche sich in einem fortgeschrittenen Wachstumsstadium befinden, in einer Draufsicht; und
- Fig. 4: das in der Fig. 3 abgebildete Pflegesystem ebenfalls während des Durchführens der Pflegemaßnahme in einer Seitenansicht.

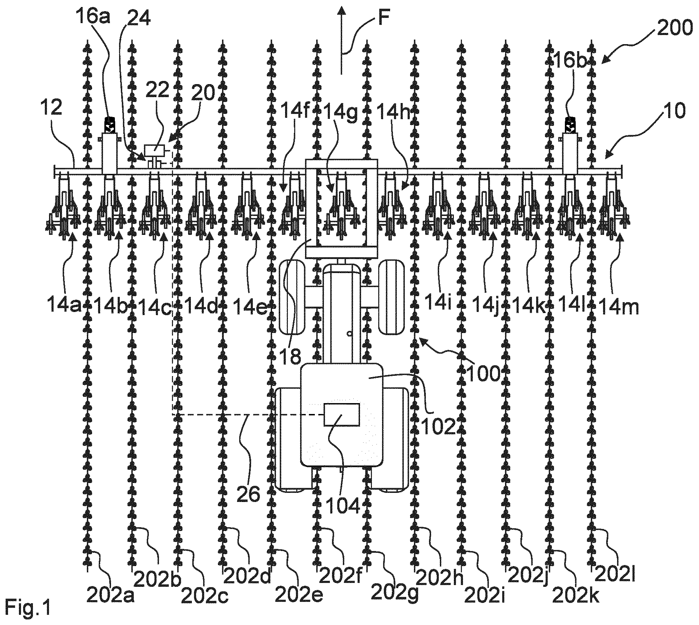

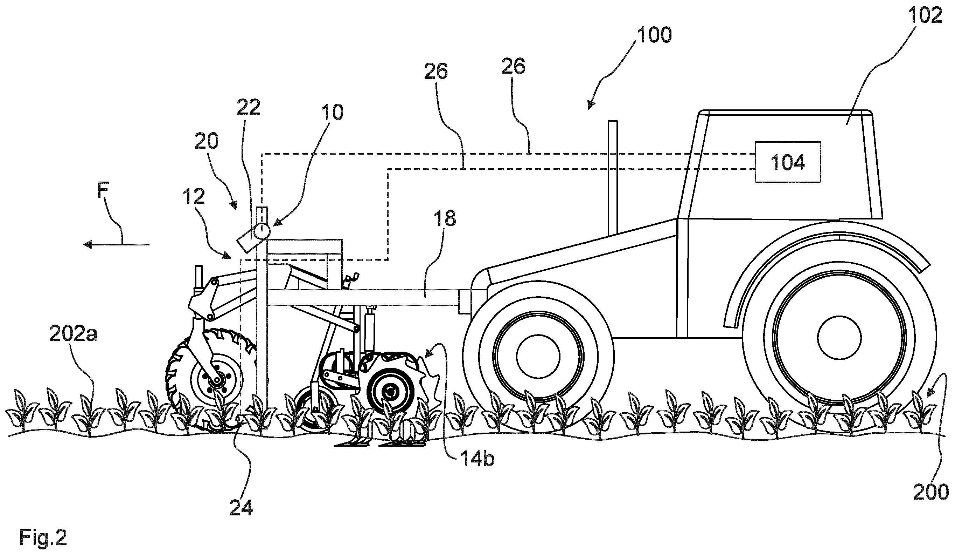

Die Fig. 1 und 2 zeigen ein Pflegesystem 100 mit einem Antriebsfahrzeug 102 und einem landwirtschaftlichen Pflanzenpflegegerät 10. Das Antriebsfahrzeug 102 ist ein Traktor. Das Pflanzenpflegegerät 10 ist ein landwirtschaftliches Hackgerät, welches über eine Kupplungsvorrichtung 18 an einer Frontaufnahme des Antriebsfahrzeugs 102 befestigt ist.

Das landwirtschaftliche Pflanzenpflegegerät 10 weist einen Querträger 12 auf, an welchem mehrere als Hackwerkzeuge ausgebildete Pflegewerkzeuge 14a-14m befestigt sind. Die Pflegewerkzeuge 14a-14m sind in Querrichtung, also quer zur Fahrtrichtung F, nebeneinander angeordnet und äquidistant voneinander beabstandet. Der Querträger 12 wird über Räder 16a, 16b gegenüber dem Boden der landwirtschaftlichen Nutzfläche abgestützt.

Mit dem landwirtschaftlichen Pflanzenpflegegerät 10 wird eine Pflegemaßnahme, nämlich ein Hackvorgang, an einer Reihenkultur 200 durchgeführt. Die Reihenkultur 200 weist mehrere Pflanzenreihen 202a-202l auf. Das landwirtschaftliche Pflanzenpflegegerät 10 umfasst eine Steuerungseinrichtung, mittels welcher ein Lenkeingriff am Antriebsfahrzeug 102 umgesetzt werden kann. Über den Lenkeingriff am Antriebsfahrzeug 102 wird die Bewegung des Pflanzenpflegegeräts 10 gesteuert.

Das landwirtschaftliche Pflanzenpflegegerät 10 umfasst eine Reihenerfassungseinrichtung 20, mittels welcher die Verläufe und Positionen der Pflanzenreihen 202a-202l während des Durchführens der Pflegemaßnahme an der Reihenkultur 200 ermittelt werden können. Auf diese Weise kann eine reihenbezogene Steuerung der Bewegung des Pflanzenpflegegeräts 10 realisiert werden.

Die Steuerungseinrichtung des landwirtschaftlichen Pflanzenpflegegeräts 10 erzeugt unter Berücksichtigung der über die Reihenerfassungseinrichtung 20 ermittelten Verläufe und Positionen der Pflanzenreihen 202a-202l Lenkbefehle, welche über die Datenverbindung 26 an das Antriebsfahrzeug 102 übermittelt werden. Die Lenksteuerung 104 des Antriebsfahrzeugs 102 setzt die über die Datenverbindung 26 übermittelten Lenkbefehle in Lenkeingriffe um. Die Datenverbindung 26 kann eine kabellose oder kabelgebundene Datenverbindung sein. Das Antriebsfahrzeug 102 und das Pflanzenpflegegerät 10 können ein Tractor Implement Management (TIM) System ausbilden. In diesem System kann die Bewegung des Antriebsfahrzeugs 102 über das Pflanzenpflegegerät 10 gesteuert werden.

Die Reihenerfassungseinrichtung 20 umfasst ein erstes Sensorsystem mit einer Sensoreinheit 22 und ein zweites Sensorsystem mit einer Sensoreinheit 24. Die Sensoreinheit 22 des ersten Sensorsystems ist eine einen Bildsensor umfassende Kamera. Die Sensoreinheit 24 des zweiten Sensorsystems ist ein berührungslos arbeitender Abstandssensor. Die Sensoreinheit 24 ist vorzugsweise dazu eingerichtet, den Abstand zu Pflanzen oder Pflanzenreihen mittels einer Laufzeitmessung zu ermitteln. Insbesondere ist die Sensoreinheit 24 ein Ultraschallsensor, ein Radarsensor, ein Lidarsensor, ein Lasersensor oder ein Laser-Profil-Scanner. Die Sensoreinheit 22 und die Sensoreinheit 24 sind folglich dazu eingerichtet, die Verläufe und/oder Positionen der Pflanzenreihen 202a-202l über unterschiedliche Mess- bzw. Aufzeichnungsprinzipien zu ermitteln. Mithin sind die Sensoreinheiten 22, 24 unterschiedliche Sensortypen.

Die Sensoreinheit 22 des ersten Sensorsystems und die Sensoreinheit 24 des zweiten Sensorsystems sind in unterschiedlichen Höhen angeordnet und weisen unterschiedliche Ausrichtungen auf. Die Sensoreinheit 22 ist oberhalb der Sensoreinheit 24 angeordnet. Aufgrund der unterschiedlichen Höhenanordnung und der unterschiedlichen Ausrichtung der Sensoreinheiten 22, 24 erfassen diese die Verläufe und Positionen der Pflanzenreihen 202a-202l aus unterschiedlichen Perspektiven. Die Sensoreinheit 22 schaut schräg von oben auf den Pflanzenbestand. Die untere Sensoreinheit 24 ist auf einen Stängelbereich der Pflanzen gerichtet und im Wesentlichen horizontal ausgerichtet. Die Sensoreinheit 22 des ersten Sensorsystems weist also einen ersten Neigungswinkel gegenüber einer Horizontalebene auf, wobei die Sensoreinheit 24 des zweiten Sensorsystems einen zweiten Neigungswinkel gegenüber einer Horizontalebene aufweist. Der Neigungswinkel der Sensoreinheit 22 gegenüber der Horizontalebene liegt im Bereich zwischen 20 und 60 Grad. Der Neigungswinkel der Sensoreinheit 24 gegenüber der Horizontalebene liegt in einem Bereich zwischen 0 und 20 Grad.

Das erste Sensorsystem, welches die Sensoreinheit 22 umfasst, und das zweite Sensorsystem, welches die Sensoreinheit 24 umfasst, können den Verlauf und/oder die Position der gleichen Pflanzenreihe oder den Verlauf und die Position von unterschiedlichen Pflanzenreihen ermitteln. Es kann also eine Reihenerfassung in der gleichen Reihe als auch eine Reihenerfassung in unterschiedlichen Reihen mittels der Reihenerfassungseinrichtung 20 umgesetzt werden.

Die Reihenerfassungseinrichtung 20 weist eine elektronische Datenverarbeitungseinrichtung auf, mittels welcher unter Berücksichtigung von Sensordaten der Sensoreinheit 22 und Sensordaten der Sensoreinheit 24 die Positionen und Verläufe der Pflanzenreihen 202a-202l ermittelt werden können.

Bei dem in den Fig. 1 und 2 dargestellten Zustand sind die Pflanzen der Pflanzenreihen 202a-202l vergleichsweise jung und klein. In diesem Wachstumsstadium der Pflanzen kann eine besonders präzise Reihenerfassung über die als Kamera ausgebildete Sensoreinheit 22 des ersten Sensorsystems erfolgen. In dem dargestellten Wachstumsstadium eignen sich die Sensordaten der Sensoreinheit 24, welcher als berührungslos arbeitender Abstandssensor ausgebildet ist, nur bedingt zur präzisen Reihenerkennung. Die Sensordaten der Sensoreinheit 24 können bei der Reihenerfassung durch die elektronische Datenverarbeitungseinrichtung trotzdem mit einer geringeren Gewichtung berücksichtigt werden.

Die Datenverarbeitungseinrichtung nimmt während der Reihenerfassung eine Sensordatenbewertung der Sensordaten der Sensoreinheiten 22, 24 vor. Im Rahmen der Sensordatenbewertung wird die Verwertbarkeit der Sensordaten zum Ermitteln von Verläufen und Positionen von Pflanzenreihen 202a-202l bewertet. In Abhängigkeit der Sensordatenbewertung kann die Datenverarbeitungseinrichtung die Verläufe und Positionen der Pflanzenreihen 202a-202l wahlweise über Sensordaten beider Sensorsysteme oder über Sensordaten nur eines der Sensorsysteme ermitteln.

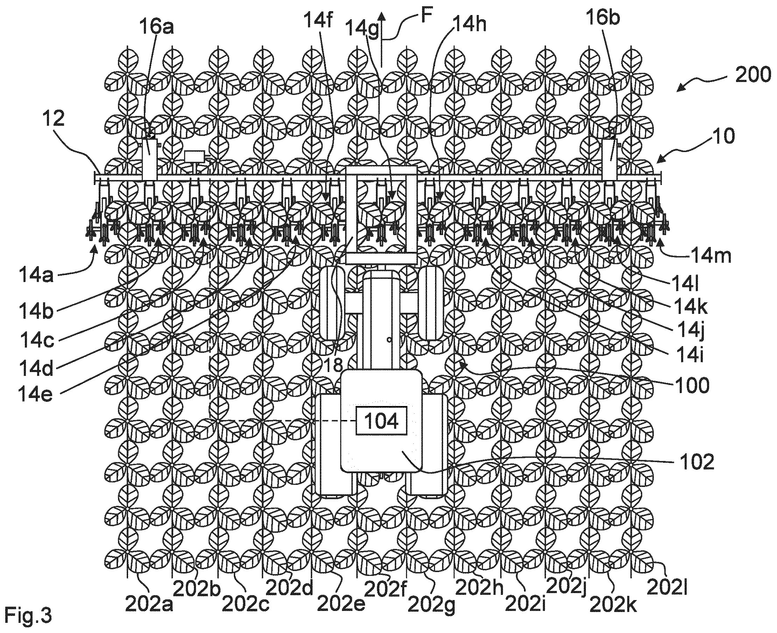

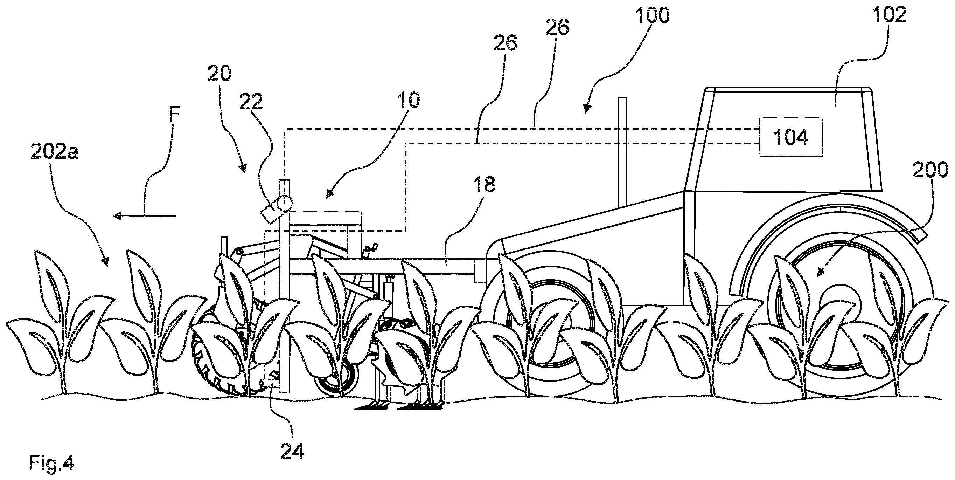

In den Fig. 3 und 4 ist ebenfalls die Durchführung einer Pflegemaßnahme an der Reihenkultur 200 dargestellt. In dem dargestellten Zustand befinden sich die Pflanzen in einem fortgeschrittenen Wachstumsstadium, sodass die Pflanzen bereits ausgeprägte Blätterstrukturen entwickelt haben. Aufgrund der ausgeprägten Blätterstrukturen kann die Reihenerfassung mit dem ersten die Sensoreinheit 22 umfassenden Sensorsystem nur noch vergleichsweise unpräzise erfolgen. Jedoch sind in diesem Wachstumsstadium die Stängel der Pflanzen über die Sensoreinheit 24 des zweiten Sensorsystems äußerst präzise zu ermitteln. Auf Grundlage der Sensordatenbewertung werden den Sensordaten der Sensoreinheit 24 nunmehr höhere Gewichtungsfaktoren von der Datenverarbeitungseinrichtung zugeordnet, sodass die Erfassung der Verläufe und Positionen der Pflanzenreihen 202a-202l schwerpunktmäßig auf den Sensordaten der Sensoreinheit 24 des zweiten Sensorsystems beruht. Den Sensordaten der Sensoreinheit 22 werden niedrigere Gewichtungsfaktoren zugeordnet als bei der in den Fig. 1 und 2 dargestellten Pflegemaßnahmendurchführung.

Die Zuordnung von Gewichtungsfaktoren erfolgt auf Grundlage einer Datenauswertung. Wenn die Sensordaten darauf hindeuten, dass bei der Datenerfassung Erfassungsschwierigkeiten vorlagen, wird den Sensordaten ein niedrigerer Gewichtungsfaktor zugeordnet. Wenn die Sensordaten darauf hinweisen, dass keine Erfassungsschwierigkeiten oder nur geringfügige Erfassungsschwierigkeiten vorlagen, wird den Sensordaten ein höherer Gewichtungsfaktor zugeordnet. Beispielsweise können inhomogene und/oder nicht-plausible Daten auf Erfassungsschwierigkeiten hindeuten. Der Gewichtungsfaktor sinkt vorzugsweise mit zunehmenden Erfassungsschwierigkeiten.

Die Datenverarbeitungseinrichtung der Reihenerfassungseinrichtung 20 kann ferner über eine Lernroutine verfügen. Im Rahmen dieser Lernroutine kann die Verwertbarkeit von Sensordaten eines Sensorsystems verbessert werden. Beispielsweise wird zur Erhöhung der Verwertbarkeit der Sensordaten des ersten Sensorsystems zum Ermitteln der Verläufe und Positionen der Pflanzenreihen 202a-202l die Auswertungsroutine für die Sensordaten des ersten Sensorsystems selbsttätig unter Berücksichtigung der Sensordaten des zweiten Sensorsystems verändert. Alternativ oder zusätzlich kann die Verwertbarkeit der Sensordaten des zweiten Sensorsystems zum Ermitteln der Verläufe und Positionen der Pflanzenreihen 202a-202l die Auswertungsroutine für die Sensordaten des zweiten Sensorsystems selbsttätig unter Berücksichtigung der Sensordaten des ersten Sensorsystems verändert werden. Die Auswertungsroutinen für die Sensordaten der Sensoreinheit 22 des ersten Sensorsystems und die Sensordaten der Sensoreinheit 24 des zweiten Sensorsystems können somit über die Sensordaten des jeweils anderen Sensorsystems verbessert werden.

### Bezugszeichenliste

- 10: Pflanzenpflegegerät
- 12: Querträger
- 14a-14m: Pflegewerkzeuge
- 16a, 16b: Räder
- 18: Kupplungsvorrichtung
- 20: Reihenerfassungseinrichtung
- 22: Sensoreinheit
- 24: Sensoreinheit
- 26: Datenverbindung

- 100: Pflegesystem
- 102: Antriebsfahrzeug
- 104: Lenksteuerung

- 200: Reihenkultur
- 202a-202l: Pflanzenreihen

- F: Fahrtrichtung

## Patentansprüche

1. Landwirtschaftliches Pflanzenpflegegerät (10) für Reihenkulturen (200), mit
- einer Reihenerfassungseinrichtung (20), welche dazu eingerichtet ist, Verläufe und/oder Positionen von Pflanzenreihen (202a-202l) während des Durchführens einer Pflegemaßnahme an einer Reihenkultur (200) zu ermitteln; und
- einer Steuerungseinrichtung, welche dazu eingerichtet ist, eine Steuerung der Bewegung und/ oder des Betriebs des landwirtschaftlichen Pflanzenpflegegeräts (10) in Abhängigkeit der durch die Reihenerfassungseinrichtung (20) ermittelten Verläufe und/oder Positionen der Pflanzenreihen (202a-202l) zu veranlassen;
wobei
die Reihenerfassungseinrichtung (20) ein erstes Sensorsystem und ein zweites Sensorsystem mit jeweils zumindest einer Sensoreinheit (22, 24) aufweist, wobei die zumindest eine Sensoreinheit (22) des ersten Sensorsystems und die zumindest eine Sensoreinheit (24) des zweiten Sensorsystems in unterschiedlichen Höhen angeordnet sind und/oder unterschiedliche Ausrichtungen aufweisen, wobei die Reihenerfassungseinrichtung (20) eine elektronische Datenverarbeitungseinrichtung aufweist, welche dazu eingerichtet ist, unter Berücksichtigung von Sensordaten des ersten Sensorsystems und Sensordaten des zweiten Sensorsystems Verläufe und/oder Positionen von Pflanzenreihen (202a-202l) zu ermitteln und die elektronische Datenverarbeitungseinrichtung dazu eingerichtet ist, im Rahmen einer Sensordatenbewertung die Verwertbarkeit der Sensordaten des ersten Sensorsystems und/oder des zweiten Sensorsystems
zum Ermitteln von Verläufen und/oder Positionen von Pflanzenreihen (202a-202l) zu bewerten, **dadurch gekennzeichnet, dass** die elektronische Datenverarbeitungseinrichtung dazu eingerichtet ist, die Sensordaten des ersten Sensorsystems und/oder die Sensordaten des zweiten Sensorsystems in Abhängigkeit der Sensordatenbewertung zu gewichten und Verläufe und/oder Positionen von Pflanzenreihen (202a-202l) über die gewichteten Sensordaten zu ermitteln.

2. Landwirtschaftliches Pflanzenpflegegerät (10) nach Anspruch 1,
**dadurch gekennzeichnet, dass** die zumindest eine Sensoreinheit (22) des ersten Sensorsystems und die zumindest eine Sensoreinheit (24) des zweiten Sensorsystems unterschiedliche Sensortypen sind.

3. Landwirtschaftliches Pflanzenpflegegerät (10) nach einem der vorstehenden Ansprüche,
**dadurch gekennzeichnet, dass** das erste Sensorsystem und das zweite Sensorsystem dazu eingerichtet sind, den Verlauf und/oder die Position der gleichen Pflanzenreihe (202a-202l) und/oder den Verlauf und/oder die Position von verschiedenen Pflanzenreihen (202a-202l) zu ermitteln.

4. Landwirtschaftliches Pflanzenpflegegerät (10) nach einem der vorstehenden Ansprüche,
**dadurch gekennzeichnet, dass**
- die zumindest eine Sensoreinheit (22) des ersten Sensorsystems einen ersten Neigungswinkel gegenüber einer Horizontalebene aufweist und die zumindest eine Sensoreinheit (24) des zweiten Sensorsystems einen zweiten Neigungswinkel gegenüber einer Horizontalebene aufweist; und/oder
- die zumindest eine Sensoreinheit (22) des ersten Sensorsystems einen ersten Schwenkwinkel gegenüber einer sich in Fahrtrichtung erstreckenden Vertikalebene aufweist und die zumindest eine Sensoreinheit (24) des zweiten Sensorsystems einen zweiten Schwenkwinkel gegenüber einer sich in Fahrtrichtung erstreckenden Vertikalebene aufweist.

5. Landwirtschaftliches Pflanzenpflegegerät (10) nach einem der vorstehenden Ansprüche,
**dadurch gekennzeichnet, dass** die zumindest eine Sensoreinheit (22) des ersten Sensorsystems und/oder die zumindest eine Sensoreinheit (24) des zweiten Sensorsystems dazu eingerichtet ist, berührungslos zu arbeiten.

6. Landwirtschaftliches Pflanzenpflegegerät (10) nach einem der vorstehenden Ansprüche,
**dadurch gekennzeichnet, dass** die zumindest eine Sensoreinheit (22) des ersten Sensorsystems und/oder die zumindest eine Sensoreinheit (24) des zweiten Sensorsystems als Abstandssensor ausgebildet ist.

7. Landwirtschaftliches Pflanzenpflegegerät (10) nach einem der vorstehenden Ansprüche,
**dadurch gekennzeichnet, dass** die zumindest eine Sensoreinheit (22) des ersten Sensorsystems und/oder die zumindest eine Sensoreinheit (24) des zweiten Sensorsystems zumindest einen Bildsensor umfasst und/oder als Kamera ausgebildet ist.

8. Landwirtschaftliches Pflanzenpflegegerät (10) nach einem der vorstehenden Ansprüche,
**dadurch gekennzeichnet, dass** die Datenverarbeitungseinrichtung dazu eingerichtet ist, die Verläufe und/oder Positionen von Pflanzenreihen (202a-202l) in Abhängigkeit der Sensordatenbewertung wahlweise über Sensordaten beider Sensorsysteme oder über Sensordaten nur eines der Sensorsysteme zu ermitteln.

9. Landwirtschaftliches Pflanzenpflegegerät (10) nach einem der vorstehenden Ansprüche,
**dadurch gekennzeichnet, dass** die elektronische Datenverarbeitungseinrichtung dazu eingerichtet ist,
- zur Erhöhung der Verwertbarkeit der Sensordaten des ersten Sensorsystems zum Ermitteln von Verläufen und/oder Positionen von Pflanzenreihen (202a-202l) eine Auswertungsroutine für die Sensordaten des ersten Sensorsystems selbsttätig unter Berücksichtigung der Sensordaten des zweiten Sensorsystems zu verändern; und/oder
- zur Erhöhung der Verwertbarkeit der Sensordaten des zweiten Sensorsystems zum Ermitteln von Verläufen und/oder Positionen von Pflanzenreihen (202a-202l) eine Auswertungsroutine für die Sensordaten des zweiten Sensorsystems selbsttätig unter Berücksichtigung der Sensordaten des ersten Sensorsystems zu verändern.

10. Verfahren zum Durchführen einer Pflegemaßnahme an einer Reihenkultur (200) mittels eines landwirtschaftlichen Pflanzenpflegegeräts (10) für Reihenkulturen (200), insbesondere mittels eines landwirtschaftlichen Pflanzenpflegegeräts (10) nach einem der vorstehenden Ansprüche, mit den Schritten:
- Ermitteln von Verläufen und/oder Positionen von Pflanzenreihen (202a-202l) mittels einer Reihenerfassungseinrichtung (20) des landwirtschaftlichen Pflanzenpflegegeräts (10), und
- Veranlassen einer Steuerung der Bewegung und/oder des Betriebs des landwirtschaftlichen Pflanzenpflegegeräts (10) in Abhängigkeit der durch die Reihenerfassungseinrichtung (20) ermittelten Verläufe und/oder Positionen der Pflanzenreihen (202a-202l) mittels einer Steuerungseinrichtung des landwirtschaftlichen Pflanzenpflegegeräts (10),
wobei
beim Ermitteln der Verläufe und/oder Positionen von Pflanzenreihen (202a-202l) ein erstes Sensorsystem und ein zweites Sensorsystem der Reihenerfassungseinrichtung (20) eingesetzt wird und zumindest eine Sensoreinheit (22) des ersten Sensorsystems und zumindest eine Sensoreinheit (24) des zweiten Sensorsystems in unterschiedlichen Höhen angeordnet sind und/oder unterschiedliche Ausrichtungen aufweisen, wobei die Reihenerfassungseinrichtung (20) eine elektronische Datenverarbeitungseinrichtung aufweist, welche unter Berücksichtigung von Sensordaten des ersten Sensorsystems und Sensordaten des zweiten Sensorsystems Verläufe und/oder Positionen von Pflanzenreihen (202a-202l) ermittelt und die elektronische Datenverarbeitungseinrichtung im Rahmen einer Sensordatenbewertung die Verwertbarkeit der Sensordaten des ersten Sensorsystems und/oder des zweiten Sensorsystems zum Ermitteln von Verläufen und/oder Positionen von Pflanzenreihen (202a-202l) bewertet, **dadurch gekennzeichnet, dass** die elektronische Datenverarbeitungseinrichtung die Sensordaten des ersten Sensorsystems und/oder die Sensordaten des zweiten Sensorsystems in Abhängigkeit der Sensordatenbewertung gewichtet und Verläufe und/oder Positionen von Pflanzenreihen (202a-202l) über die gewichteten Sensordaten ermittelt.

11. Verfahren nach Anspruch 10,
**dadurch gekennzeichnet, dass** das Ermitteln der Verläufe und/oder Positionen von Pflanzenreihen (202a-202l) bei einem der Sensorsysteme über eine kamerabasierte Bildaufzeichnung und bei einem der Sensorsysteme über eine berührungslose Abstandsmessung erfolgt.

## Claims

1. Agricultural plant cultivation apparatus (10) for row crops (200), comprising
- a row detection device (20) which is designed to determine profiles and/or positions of plant rows (202a-202l) while a cultivation measure is carried out on a row crop (200); and
- a control device which is designed to implement control of the movement and/or operation of the agricultural plant cultivation apparatus (10) on the basis of the profiles and/or positions of the plant rows (202a-202l) determined by the row detection device (20);
wherein the row detection device (20) has a first sensor system and a second sensor system, each having at least one sensor unit (22, 24), wherein the at least one sensor unit (22) of the first sensor system and the at least one sensor unit (24) of the second sensor system are arranged at different heights and/or have different orientations, wherein the row detection device (20) comprises an electronic data processing device which is designed to determine profiles and/or positions of plant rows (202a-202l), taking into account sensor data from the first sensor system and sensor data from the second sensor system, and the electronic data processing device, as part of a sensor data evaluation process, is designed to evaluate the usability of the sensor data from the first sensor system and/or from the second sensor system for determining profiles and/or positions of plant rows (202a-202l),**characterized in that** the electronic data processing device is designed to weight the sensor data from the first sensor system and/or the sensor data from the second sensor system on the basis of the sensor data evaluation, and to determine profiles and/or positions of plant rows (202a-202l) using the weighted sensor data.

2. Agricultural plant cultivation apparatus (10) according to claim 1,
**characterized in that** the at least one sensor unit (22) of the first sensor system and the at least one sensor unit (24) of the second sensor system are different sensor types.

3. Agricultural plant cultivation apparatus (10) according to either of the preceding claims,
**characterized in that** the first sensor system and the second sensor system are designed to determine the profile and/or position of the same plant row (202a-202l) and/or the profile and/or position of different plant rows (202a-202l).

4. Agricultural plant cultivation apparatus (10) according to any of the preceding claims,
**characterized in that**
- the at least one sensor unit (22) of the first sensor system has a first angle of inclination relative to a horizontal plane, and the at least one sensor unit (24) of the second sensor system has a second angle of inclination relative to a horizontal plane; and/or
- the at least one sensor unit (22) of the first sensor system has a first pivot angle relative to a vertical plane extending in the direction of travel, and the at least one sensor unit (24) of the second sensor system has a second pivot angle relative to a vertical plane extending in the direction of travel.

5. Agricultural plant cultivation apparatus (10) according to either of the preceding claims,
**characterized in that** the at least one sensor unit (22) of the first sensor system and/or the at least one sensor unit (24) of the second sensor system is designed to operate contactlessly.

6. Agricultural plant cultivation apparatus (10) according to either of the preceding claims,
**characterized in that** the at least one sensor unit (22) of the first sensor system and/or the at least one sensor unit (24) of the second sensor system is designed as a distance sensor.

7. Agricultural plant cultivation apparatus (10) according to either of the preceding claims,
**characterized in that** the at least one sensor unit (22) of the first sensor system and/or the at least one sensor unit (24) of the second sensor system comprises at least one image sensor and/or is designed as a camera.

8. Agricultural plant cultivation apparatus (10) according to either of the preceding claims,
**characterized in that** the data processing device is designed to determine the profiles and/or positions of plant rows (202a-202l) on the basis of the sensor data evaluation, either using sensor data from both sensor systems or using sensor data from only one of the sensor systems.

9. Agricultural plant cultivation apparatus (10) according to either of the preceding claims,
**characterized in that** the electronic data processing device is designed to
- automatically modify an evaluation routine for the sensor data from the first sensor system, taking into account the sensor data from the second sensor system, in order to increase the usability of the sensor data from the first sensor system for determining profiles and/or positions of plant rows (202a-202l); and/or
- automatically modify an evaluation routine for the sensor data from the second sensor system, taking into account the sensor data from the first sensor system, in order to increase the usability of the sensor data from the second sensor system for determining profiles and/or positions of plant rows (202a-202l).

10. Method for carrying out a cultivation measure on a row crop (200) by means of an agricultural plant cultivation apparatus (10) for row crops (200), in particular by means of an agricultural plant cultivation apparatus (10) according to any of the preceding claims, comprising the steps of:
- determining profiles and/or positions of plant rows (202a-202l) by means of a row detection device (20) of the agricultural plant cultivation apparatus (10), and
- implementing control of the movement and/or operation of the agricultural plant cultivation apparatus (10) on the basis of the profiles and/or positions of the plant rows (202a-202l) determined by the row detection device (20), by means of a control device of the agricultural plant cultivation apparatus (10),
wherein a first sensor system and a second sensor system of the row detection device (20) are used to determine the profiles and/or positions of plant rows (202a-202l), and at least one sensor unit (22) of the first sensor system and at least one sensor unit (24) of the second sensor system are arranged at different heights and/or have different orientations, wherein the row detection device (20) comprises an electronic data processing device which determines profiles and/or positions of plant rows (202a-202l) taking into account sensor data from the first sensor system and sensor data from the second sensor system, and the electronic data processing device, as part of a sensor data evaluation process, evaluates the usability of the sensor data from the first sensor system and/or from the second sensor system for determining profiles and/or positions of plant rows (202a-202l), **characterized in that** the electronic data processing device weights the sensor data from the first sensor system and/or the sensor data from the second sensor system on the basis of the sensor data evaluation, and determines profiles and/or positions of plant rows (202a-202l) using the weighted sensor data.

11. Method according to claim 10,
**characterized in that** the profiles and/or positions of plant rows (202a-202l) are determined in one of the sensor systems by means of camera-based image capture, and in one of the sensor systems by means of contactless distance measurement.

## Revendications

1. Appareil agricole d'entretien de plantes (10) pour cultures en rangées (200), comportant
- un dispositif de détection de rangées (20) qui est configuré pour déterminer des trajectoires et/ou des positions de rangées de plantes (202a-202l) pendant l'exécution d'une mesure d'entretien sur une culture en rangées (200) ; et
- un dispositif de commande qui est configuré pour provoquer une commande du mouvement et/ou du fonctionnement de l'appareil agricole d'entretien de plantes (10) en fonction des trajectoires et/ou des positions des rangées de plantes (202a-202l) déterminées par le dispositif de détection de rangées (20) ;
dans lequel le dispositif de détection de rangées (20) présente un premier système à capteur et un second système à capteur comportant respectivement au moins une unité formant capteur (22, 24), dans lequel l'au moins une unité formant capteur (22) du premier système à capteur et l'au moins une unité formant capteur (24) du second système à capteur sont disposées à des hauteurs différentes et/ou présentent des orientations différentes, dans lequel le dispositif de détection de rangées (20) présente un dispositif de traitement de données électronique qui est configuré pour déterminer des trajectoires et/ou des positions de rangées de plantes (202a-202l) en prenant en compte des données de capteur du premier système à capteur et des données de capteur du second système à capteur, et le dispositif de traitement de données électronique est configuré, dans le cadre d'une évaluation de données de capteur, pour évaluer l'exploitabilité des données de capteur du premier système à capteur et/ou du second système à capteur pour la détermination de trajectoires et/ou de positions de rangées de plantes (202a-202l), **caractérisé en ce que** le dispositif de traitement de données électronique est configuré pour pondérer les données de capteur du premier système à capteur et/ou les données de capteur du second système à capteur en fonction de l'évaluation de données de capteur et pour déterminer des trajectoires et/ou des positions de rangées de plantes (202a-202l) par l'intermédiaire des données de capteur pondérées.

2. Appareil agricole d'entretien de plantes (10) selon la revendication 1,
**caractérisé en ce que** l'au moins une unité formant capteur (22) du premier système à capteur et l'au moins une unité formant capteur (24) du second système à capteur sont des types de capteurs différents.

3. Appareil agricole d'entretien de plantes (10) selon l'une des revendications précédentes,
**caractérisé en ce que** le premier système à capteur et le second système à capteur sont configurés pour déterminer la trajectoire et/ou la position de la même rangée de plantes (202a-202l) et/ou la trajectoire et/ou la position de différentes rangées de plantes (202a-202l).

4. Appareil agricole d'entretien de plantes (10) selon l'une des revendications précédentes,
**caractérisé en ce que**
- l'au moins une unité formant capteur (22) du premier système à capteur présente un premier angle d'inclinaison par rapport à un plan horizontal et l'au moins une unité formant capteur (24) du second système à capteur présente un second angle d'inclinaison par rapport à un plan horizontal ; et/ou
- l'au moins une unité formant capteur (22) du premier système à capteur présente un premier angle de pivotement par rapport à un plan vertical s'étendant dans la direction de conduite et l'au moins une unité formant capteur (24) du second système à capteur présente un second angle de pivotement par rapport à un plan vertical s'étendant dans la direction de conduite.

5. Appareil agricole d'entretien de plantes (10) selon l'une des revendications précédentes,
**caractérisé en ce que** l'au moins une unité formant capteur (22) du premier système à capteur et/ou l'au moins une unité formant capteur (24) du second système à capteur sont configurées pour fonctionner sans contact.

6. Appareil agricole d'entretien de plantes (10) selon l'une des revendications précédentes,
**caractérisé en ce que** l'au moins une unité formant capteur (22) du premier système à capteur et/ou l'au moins une unité formant capteur (24) du second système à capteur sont configurées comme des capteurs de distance.

7. Appareil agricole d'entretien de plantes (10) selon l'une des revendications précédentes,
**caractérisé en ce que** l'au moins une unité formant capteur (22) du premier système à capteur et/ou l'au moins une unité formant capteur (24) du second système à capteur comprennent au moins un capteur d'image et/ou sont configurées comme des caméras.

8. Appareil agricole d'entretien de plantes (10) selon l'une des revendications précédentes,
**caractérisé en ce que** le dispositif de traitement de données est configuré pour déterminer les trajectoires et/ou les positions de rangées de plantes (202a-202l) en fonction de l'évaluation de données de capteurs, au choix par l'intermédiaire de données de capteurs des deux systèmes à capteur ou par l'intermédiaire de données de capteurs d'un seul des systèmes à capteur.

9. Appareil agricole d'entretien de plantes (10) selon l'une des revendications précédentes,
**caractérisé en ce que** le dispositif de traitement de données est configuré pour,
- pour l'augmentation de l'exploitabilité des données de capteur du premier système à capteur pour la détermination des trajectoires et/ou des positions de rangées de plantes (202a-202l), modifier automatiquement une routine d'évaluation pour les données de capteur du premier système à capteur en prenant en compte les données de capteur du second système à capteur ; et/ou
- pour l'augmentation de l'exploitabilité des données de capteur du second système à capteur pour la détermination des trajectoires et/ou des positions de rangées de plantes (202a-202l), modifier automatiquement une routine d'évaluation pour les données de capteur du second système à capteur en prenant en compte les données de capteur du premier système à capteur.

10. Procédé permettant d'exécuter une mesure d'entretien sur une culture en rangées (200) au moyen d'un appareil agricole d'entretien de plantes (10) pour cultures en rangées (200), en particulier au moyen d'un appareil agricole d'entretien de plantes (10) selon l'une des revendications précédentes, comportant les étapes consistant à :
- déterminer des trajectoires et/ou des positions de rangées de plantes (202a-202l) au moyen d'un dispositif de détection de rangées (20) de l'appareil agricole d'entretien de plantes (10), et
- provoquer une commande du mouvement et/ou du fonctionnement de l'appareil agricole d'entretien de plantes (10) en fonction des trajectoires et/ou des positions des rangées de plantes (202a-202l) déterminées par le dispositif de détection de rangées (20) au moyen d'un dispositif de commande de l'appareil agricole d'entretien de plantes (10),
dans lequel un premier système à capteur et un second système à capteur du dispositif de détection de rangées (20) sont utilisés lors de la détermination des trajectoires et/ou des positions de rangées de plantes (202a-202l) et au moins une unité formant capteur (22) du premier système à capteur et au moins une unité formant capteur (24) du second système à capteur sont disposées à des hauteurs différentes et/ou présentent des orientations différentes, dans lequel le dispositif de détection de rangées (20) présente un dispositif de traitement de données électronique, lequel détermine, en prenant en compte des données de capteur du premier système à capteur et des données de capteur du second système à capteur, des trajectoires et/ou des positions de rangées de plantes (202a-202l) et le dispositif de traitement de données électronique évalue, dans le cadre d'une évaluation de données de capteur, l'exploitabilité des données de capteur du premier système à capteur et/ou du second système à capteur pour la détermination des trajectoires et/ou des positions de rangées de plantes (202a-202l), **caractérisé en ce que** le dispositif de traitement de données électronique pondère les données de capteur du premier système à capteur et/ou les données de capteur du second système à capteur en fonction de l'évaluation de données de capteur et détermine des trajectoires et/ou des positions de rangées de plantes (202a-202l) par l'intermédiaire des données de capteur pondérées.

11. Procédé selon la revendication 10,
**caractérisé en ce que** la détermination des trajectoires et/ou des positions de rangées de plantes (202a-202l) est effectuée pour l'un des systèmes à capteur par l'intermédiaire d'un enregistrement d'images basé sur une caméra et pour l'un des systèmes à capteur par l'intermédiaire d'une mesure de distance sans contact.
